# EUROPEAN PATENT SPECIFICATION

(11) **EP 2 396 207 B1**
(45) Date of publication and mention of the grant of the patent: **22.04.2020**
(21) Application number: 10741481.5
(22) Date of filing: 09.02.2010
(51) Int. Cl.: B61H 15/00, B60T 15/04, F16D 65/28, F16D 65/54, F16D 121/02, F16D 125/70

(54) **AN ARRANGEMENT IN A RAIL VEHICLE BRAKE UNIT**
ANORDNUNG IN DER BREMSEINHEIT EINES SCHIENENFAHREUGES
AMÉNAGEMENT DANS UNE UNITÉ DE FREINAGE POUR VÉHICULE FERROVIAIRE

(30) Priority: 10.02.2009 SE 0950068; 10.12.2009 US 285348 P
(43) Date of publication of application: 21.12.2011
(73) Proprietor: Faiveley Transport Nordic AB, 261 24 Landskrona (SE)
(72) Inventor: SWENSON, Jonas, S-261 76 Asmundtorp (SE)
(74) Representative: Ström & Gulliksson AB
(86) International application number: PCT/SE2010/050153
(87) International publication number: WO 2010/093318

(56) References cited:
- GB-A- 930 576
- GB-A- 930 576
- US-A- 3 669 224
- US-A- 3 669 224
- US-B1- 6 186 284
- US-B1- 6 186 284
- US-B1- 6 431 329
- US-B1- 6 431 329

## Description

### Technical Field

The present invention relates to an arrangement in a rail vehicle brake unit for decreasing the risk for bending of a brake force transmitting spindle extending out of the brake unit, the spindle being part of a slack adjuster mechanism in the brake unit comprising an adjuster tube coaxial with the spindle.

### Background

In certain brake arrangements on rail vehicles, for example so called bogie brakes, the brake unit spindle may be so long that it may be susceptible to bending, which will make it less fit for its intended purpose. An example of a known brake arrangement design suffering from this drawback is disclosed in US-A-3,669,224.

### Summary

The main object of the invention is to obviate the drawback with a long spindle. This object is according to the invention attained by an arrangement in a rail vehicle brake unit having the features set forth in appended claim 1. The arrangement is characterized by a spindle sleeve, which extends along the spindle a distance appropriate for preventing bending of the spindle, has an inner diameter slightly exceeding the outer diameter of the spindle and is guidingly connected to the adjuster tube.

In a practical embodiment, the spindle sleeve at its end extending into the adjuster tube is provided with a spindle sleeve bushing with an outer diameter corresponding to the inner diameter of the adjuster tube. This means that it may be pushed into position in the adjuster tube.

Here, the spindle sleeve bushing may be held in position in the adjuster tube by two locking rings.

In a further aspect, the invention concerns a rail vehicle comprising a brake unit arrangement of the type set forth above.

By the invention it is possible to remove the problem with deformed spindles. Also, it will be possible to increase the force transmitted by the spindle without changing any other current members of the design. The spindle will be better protected, for example against environmental influences under a rail vehicle. Last, but not least, already delivered brake units may easily be modified with the improvement according to the invention.

### Brief Description of the Drawings

The invention will be described in further detail below under reference to the accompanying drawings, in which
Fig 1 is a cross-sectional view trough parts of a known brake unit,
Fig 2 is a generally corresponding view through a brake unit modified according to the invention, and
Fig 3 is cross-sectional view through a brake unit modified according to the invention.

### Detailed Description of Embodiments

The present invention relates to a brake unit for a rail vehicle. As is well known in the art, a brake unit may be defined as a brake actuator with a built-in slack adjuster or brake regulator. The brake actuator is most often operated by compressed air, but may alternatively be operated by another medium, for example hydraulic fluid. The brake actuating force from the brake unit is delivered by an axially movable rod or spindle.

The invention to be described can be utilized in any brake unit but is illustrated with a known brake unit, for example of the general type shown in applicant's SE-C-529,112 (corresponding to WO2007/037750A1) to which reference is made for a more detailed description.

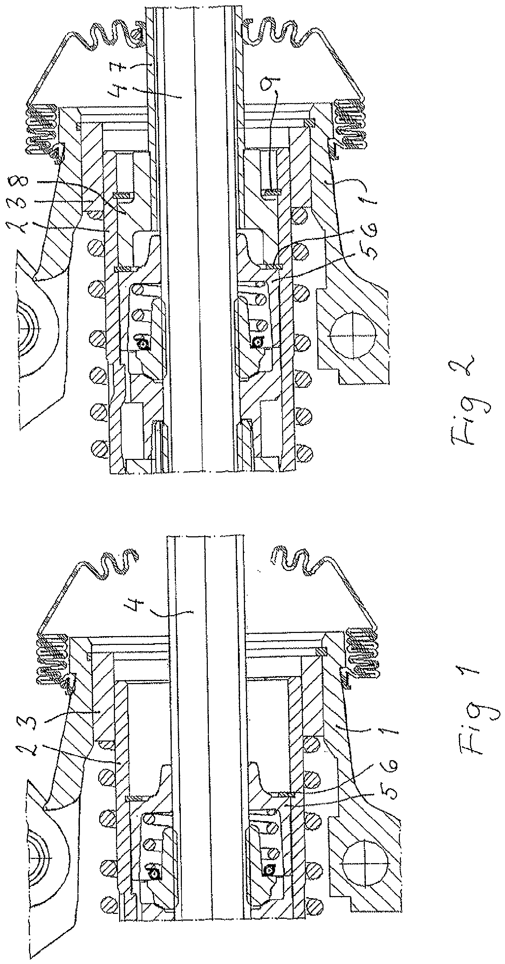

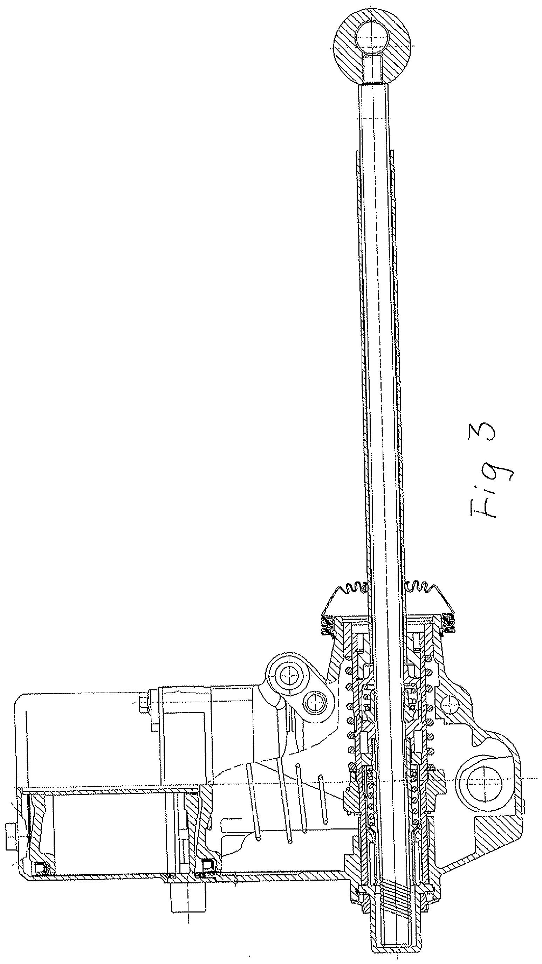

Reference is now made to Fig 1. Shown therein are parts of a known brake unit relevant for a proper understanding of the invention, which is described below under reference to Figs 2 and 3.

A brake unit housing is provided with reference numeral 1. An adjuster tube 2, containing a slack adjuster mechanism, is axially movable in the housing. It may, as shown, be guided in its shown forward end by a guide bushing 3. An important member of the slack adjuster mechanism is its spindle 4, which in the shown case acts as the push rod of the brake unit. The main purpose of the slack adjuster mechanism is - as known - to push out incremental lengths of the spindle 4 in relation to the adjuster tube 2 in response to wear of brake blocks or brake pads in the brake system, in which the brake unit is arranged. The slack adjuster mechanism is per se known and is not further described.

The spindle 4 is axially guided in the adjuster tube 2, for example near the forward end of the latter by an adjuster tube bushing 5 held in position by a locking ring 6 in the adjuster tube 2.

If the spindle 4 is long or has a long span without further guiding, as for example is the case in a so-called bogie brake shown in EP-B-1 097 075, there may be a risk for the spindle 4 to be bent and therefore less fit for further use in the arrangement.

This risk is greatly reduced with a modification according to the invention. This modification is illustrated in Figs 2 and 3. A spindle sleeve 7 with an inner diameter slightly exceeding the outer diameter of the spindle 4 extends along the spindle a distance which is appropriate for preventing bending of the spindle.

The spindle sleeve 7 is connected to and guided by the adjuster tube 2, in the shown case by being provided at its end extending into the adjuster tube with a spindle sleeve bushing 8 with an outer diameter corresponding to the inner diameter of the adjuster tube 2. The spindle sleeve bushing 8 is held in position in the adjuster tube 2 between the locking ring 6 and a further locking ring 9.

Modifications are possible within the scope of the appended claims.

## Claims

1. An arrangement in a rail vehicle brake unit for decreasing the risk for bending of a brake force transmitting spindle (4) extending out of the brake unit, the spindle (4) being part of a slack adjuster mechanism in the brake unit comprising an adjuster tube (2) coaxial with the spindle (4), **characterized by** a spindle sleeve (7), which extends along the spindle (4) a distance appropriate for preventing bending of the spindle (4), has an inner diameter slightly exceeding the outer diameter of the spindle (4) and is guidingly connected to the adjuster tube (2).

2. The arrangement according to claim 1, wherein the spindle sleeve (7) at its end extending into the adjuster tube (2) is provided with a spindle sleeve bushing (8) with an outer diameter corresponding to the inner diameter of the adjuster tube (2).

3. The arrangement according to claim 2, wherein the spindle sleeve bushing (8) is held in position in the adjuster tube (2) by two locking rings (6,9).

4. A rail vehicle comprising a brake unit arrangement as claimed in any one of the preceding claims.

## Patentansprüche

1. Anordnung in einer Schienenfahrzeugbremseinheit zur Verringerung der Gefahr eines Durchbiegens einer sich aus der Bremseinheit erstreckenden Bremskraftübertragungsspindel (4), wobei die Spindel (4) Teil einer Verschleißnachstelleinrichtung in der Bremseinheit ist, die ein koaxial zur Spindel (4) angeordnetes Einstellrohr (2) aufweist, **gekennzeichnet durch** eine Spindelhülse (7), die sich längs der Spindel (4) über eine zum Verhindern eines Durchbiegens der Spindel (4) zweckdienliche Distanz erstreckt, einen Innendurchmesser hat, der etwas größer ist als der Außendurchmesser der Spindel (4), und führend mit dem Einstellrohr (2) verbunden ist.

2. Anordnung nach Anspruch 1, wobei die Spindelhülse (7) an ihrem in das Einstellrohr (2) reichenden Ende mit einer Spindelhülsenbuchse (8) versehen ist, deren Außendurchmesser dem Innendurchmesser des Einstellrohrs (2) entspricht.

3. Anordnung nach Anspruch 2, wobei die Spindelhülsenbuchse (8) mittels zweier Sicherungsringe (6, 9) in dem Einstellrohr (2) in Position gehalten ist.

4. Schienenfahrzeug mit einer Bremseinheitanordnung gemäß einem der vorhergehenden Ansprüche.

## Revendications

1. Agencement dans une unité de frein de véhicule ferroviaire pour réduire le risque de plier une broche (4) de transmission de force de frein s'étendant hors de l'unité de frein, la broche (4) faisant partie d'un mécanisme d'ajustement de jeu dans l'unité de frein comprenant un tube d'ajusteur (2) coaxial par rapport à la broche (4), **caractérisé par** un manchon de broche (7) qui s'étend le long de la broche (4) sur une distance appropriée pour empêcher le pliage de la broche (4), a un diamètre interne légèrement supérieur au diamètre externe de la broche (4) et est raccordé par guidage au tube d'ajusteur (2).

2. Agencement selon la revendication 1, dans lequel le manchon de broche (7), au niveau de son extrémité s'étendant dans le tube d'ajusteur (2), est prévu avec une douille de manchon de broche (8) avec un diamètre externe correspondant au diamètre interne du tube d'ajusteur (2).

3. Agencement selon la revendication 2, dans lequel la douille de manchon de broche (8) est maintenue en position dans le tube d'ajusteur (2) par deux bagues de verrouillage (6, 9).

4. Véhicule ferroviaire comprenant un agencement d'unité de frein selon l'une quelconque des revendications précédentes.
